# EUROPÄISCHE PATENTSCHRIFT

(11) **EP 2 090 681 B1**
(45) Veröffentlichungstag und Bekanntmachung des Hinweises auf die Patenterteilung: **12.03.2014**
(21) Anmeldenummer: 09000553.9
(22) Anmeldetag: 16.01.2009
(51) Int. Cl.: D01H 4/12, D01H 4/14, F16C 39/06

(54) **Axiallager**
Axial bearing
Palier axial

(30) Priorität: 13.02.2008 DE 102008008854
(43) Veröffentlichungstag der Anmeldung: 19.08.2009
(73) Patentinhaber: Saurer Germany GmbH & Co. KG, 42897 Remscheid (DE)
(72) Erfinder: Winzen, Lothar, 41812 Erkelenz (DE)
(74) Vertreter: Hamann, Arndt

(56) Entgegenhaltungen:
- WO-A1-92/01097
- DE-A1- 10 050 694

## Beschreibung

Die Erfindung betrifft ein Axiallager für einen im Lagerzwickel einer Stützscheibenlagerung axialschubfrei gelagerten Spinnrotor mit den Merkmalen des Oberbegriffes des Anspruches 1.

Im Zusammenhang mit Offenend-Rotorspinnmaschinen sind Spinnaggregate bekannt, bei denen der mit hoher Drehzahl in einem unterdruckbeaufschlagten Rotorgehäuse umlaufende Spinnrotor mit seinem Rotorschaft im Lagerspalt einer Stützscheibenlageranordnung abgestützt und über ein endseitig angeordnetes mechanisches Axiallager positioniert ist.
Die Achsen der beiden Stützscheibenpaare sind dabei derart geschränkt, dass auf den Rotorschaft ein Axialschub ausgeübt wird, der den Rotorschaft in Anlage an dem mechanischen Axiallager hält.

Diese Art der Lagerung von Offenend-Spinnrotoren ist seit langem bekannt und beispielsweise in der DE-OS 25 14 734 ausführlich beschrieben.
Mit solchen in der Praxis bewährten Spinnrotorlagerungen sind Rotordrehzahlen von > 100.000 Umdrehungen pro Minute zu realisieren.

Nachteilig bei dieser Art der Spinnrotorlagerung ist allerdings, dass aufgrund der Schränkung der Stützscheiben zwischen den Laufflächen der Stützscheiben und dem Rotorschaft erhöhte Reibung auftritt, die zu einer Erwärmung der Laufflächen der Stützscheiben führt. Durch diese Reibungswärme werden nicht nur die Laufflächen der Stützscheiben erheblich beansprucht, sondern zur Überwindung dieser Reibung ist auch zusätzliche Energie notwendig.

Bei solchen Spinnrotorlagerungen sind außerdem die mechanischen Axiallager, auch bei vorschriftsmäßiger Schmierung, einem nicht unerheblichen Verschleiß unterworfen.

Es sind daher in der Vergangenheit bereits Versuche unternommen worden, die mechanischen Axiallager durch verschleißfreie Axiallager, zum Beispiel durch Luftlager oder durch Magnetlager, zu ersetzen.
Da auch bei Luftlagern ein Axialschub des Rotorschaftes in Richtung auf das Axiallager erforderlich ist, konnten mit Luftlagern die grundsätzlichen Probleme dieser Spinnrotorlagerungen nicht beseitigt werden.

Offenend-Spinnvorrichtungen, bei denen der Spinnrotor axialschubfrei im Lagerzwickel einer Stützscheibenlagerung abgestützt und durch ein rotorschaftendseitig angeordnetes magnetisches Lager axial positioniert wird, sind beispielsweise durch die DE 197 29 191 A1, die DE 199 10 279 A1, die DE 100 50 694 A1 oder die DE 299 20 394 U1 bekannt.

Das magnetische Axiallager verfügt dabei jeweils über eine statische Lagerkomponente mit zwei beidseits durch Polscheiben begrenzte Permanentmagnetringe, die so in einem Lagerkörper angeordnet sind, dass sich im Einbauzustand gleichsinnige Pole (N/N oder S/S) gegenüberstehen.
Die zugehörige dynamische Lagerkomponente wird durch drei im Abstand der Polscheiben am Rotorschaft des Spinnrotors angeordnete ferromagnetische Stege gebildet.
Da bei solchen magnetischen Axiallagern unbedingt verhindert werden muss, dass die ferromagnetischen Stege der dynamischen Lagerkomponente während des Spinnbetriebes oder während der Rotorreinigung, bei der der Spinnrotor auf der Stützscheibenlagerung mit einem Kippmoment beaufschlagt wird, an die Polscheiben der statischen Lagerkomponente anlaufen, sind diese magnetischen Axiallager außerdem mit Schutzeinrichtungen ausgestattet, die einen körperlichen Kontakt zwischen den beiden Lagerkomponenten zuverlässig verhindert.
Das Axiallager gemäß DE 199 10 279 A1 verfügt beispielsweise über entsprechende Stützmittel mit Stützflächen, die mit einer reibwertreduzierenden sowie verschleißgeschützten Oberflächenschicht ausgestattet und in geringem radialen Abstand zum Rotorschaft angeordnet sind.
Der Rotorschaft stützt sich beim Reinigen des Spinnrotors an diesen Oberflächenschichten ab, bevor es zu dem vorstehend erwähnten Kontakt zwischen den ferromagnetischen Stegen des Rotorschaftes und den stationären Polscheiben kommen kann.
Bei diesem bekannten Axiallager ist außerdem die statische Lagerkomponente bezüglich der Mittellängsachse des im Lagerzwickel der Stützscheibenlagerung rotierbar gelagerten Spinnrotors etwas nach oben versetzt angeordnet.
Die mittenversetzte Anordnung der statischen Lagerkomponente führte allerdings zu einer deutlichen Reduzierung der Axialsteifigkeit des Lagers und hat daher keinen Eingang in die Praxis gefunden.

Ein magnetisches Axiallager mit einer vergleichbaren Schutzeinrichtung für die Magnetlagerkomponenten ist auch in der DE 299 20 394 U1 beschrieben.
Bei diesem bekannten Axiallager ist im Bereich des hinteren Lagerzwickels der Stützscheibenlagerung eine stiftartige Abstützeinrichtung angeordnet, die wenigstens teilweise aus einem oxidkeramischen Werkstoff besteht und so positioniert ist, dass die ferromagnetischen Stege der dynamischen Lagerkomponente unter keinen Umständen an die Polscheiben der statischen Lagerkomponente anlaufen können.

Mit den vorstehend beschriebenen Schutzeinrichtungen konnte zwar verhindert werden, dass die Magnetlagerkomponenten dieser Axiallager in direkten Kontakt miteinander kommen, als nachteilig hat sich bei derartigen Schutzeinrichtungen allerdings erwiesen, dass der Rotorschaft nicht nur während des Reinigens des Spinnrotors, wenn er durch ein aufgesetztes Reinigungsaggregat mit einem Kippmoment beaufschlagt wird, an der Schutzeinrichtung anliegt, sondern dass der Rotorschaft aufgrund der magnetischen Radialkraft des Axiallagers auch anschließend beim Wiederanlaufen der Offenend-Spinnvorrichtung noch eine geraume Zeit weiter an den Schutzeinrichtungen schleift.
Das heißt, der auf dem Rotorschaft des Spinnrotors aufliegende Tangentialriemen bzw. die zugehörige Andrückrolle sind nach dem Lösen der Rotorbremse nicht in der Lage, die magnetische Radialkraft des magnetischen Axiallagers zu überwinden und den Rotorschaft des Spinnrotors sofort wieder ordnungsgemäß im Lagerzwickel der Stützscheibenlagerung zu positionieren.
Bei den vorgenannten Offenend-Spinnvorrichtungen besteht folglich die Gefahr, dass es durch das Schleifen des rotierenden Rotorschaftes und der stationären Schutzeinrichtung mit der Zeit zu Schäden an der Spinnvorrichtung, insbesondere am Rotorschaft des Spinnrotors, kommt.

Es ist daher bereits vorgeschlagen worden, die Schutzeinrichtung so auszubilden, dass eine Relativbewegung zwischen dem Rotorschaft und der Schutzeinrichtung weitestgehend vermieden wird.
In der DE 100 50 694 A1 ist ein magnetisches Axiallager beschrieben, das mit einem rotierbaren Stützmittel in Form eines Wälzlagers ausgestattet ist.
Magnetische Axiallager mit solchen rotierbar gelagerten Stützmitteln sind im Betrieb allerdings relativ empfindlich und wartungsintensiv.

Da solche Axiallager außerdem verhältnismäßig kostspielig sind, haben auch sie keinen Einzug in die Praxis gefunden.

Ausgehend vom vorgenannten Stand der Technik liegt der Erfindung die Aufgabe zugrunde, ein magnetisches Axiallager mit einer ausreichend hohen Axialsteifigkeit zu entwickeln, bei dem einerseits sichergestellt ist, dass die dynamischen und die stationären Magnetlagerkomponenten nicht in einen gegenseitigen körperlichen Kontakt treten können und bei dem anderseits gewährleistet ist, dass der Rotorschaft beim Wiederanlaufen der Spinnvorrichtung wieder vorschriftsmäßig auf der Stützscheibenlagerung positioniert ist.

Diese Aufgabe wird erfindungsgemäß durch ein Axiallager gelöst, das die im Kennzeichen des Anspruches 1 beschriebenen Merkmale aufweist.

Vorteilhafte Ausgestaltungen der Erfindung sind Gegenstand der Unteransprüche.

Die erfindungsgemäße Ausbildung eines Axiallagers mit Polscheiben, die jeweils einen lichten Querschnitt aufweisen, der im Bereich einer im Einbauzustand der Polscheiben vertikal angeordneten Achse eine größere Ausdehnung aufweist, als im Bereich einer zur vertikalen Achse orthogonal angeordneten Achse, führt gegenüber den bislang bekannten magnetischen Axiallagern zu einer Änderung der Stärke der radialen magnetischen Kraftkomponente des Axiallagers.
Das heißt, durch einen relativ breiten Ringspalt im oberen Bereich der vertikalen Symmetrieachse kommt es zu einer deutlichen Abschwächung der Stärke der nach oben gerichteten radialen Kraftkomponente des magnetischen Axiallagers, wobei die Axialsteifigkeit des Lagers aufgrund der nach wie vor relativ geringen Ringspaltbreite in den restlichen Bereichen nahezu unverändert bleibt.

Wie im Anspruch 2 beschrieben, führt die erfindungsgemäße Ausbildung der lichten Querschnittsfläche der Polscheiben dazu, dass der Ringspalt im oberen Bereich der vertikalen Achse seine größte Ausdehnung aufweist, mit der Folge, dass die Axialsteifigkeit des Lagers, die für die Funktionsfähigkeit des Axiallagers während des Spinnbetriebes maßgeblich ist, nahezu unbeeinflusst bleibt, während die Radialkraft des Axiallagers deutlich minimiert wird.
Das heißt, die Radialkraft des Lagers wird so weit herabgesetzt, dass gewährleistet ist, dass insbesondere nach einer Rotorreinigung durch ein Reinigungsaggregat der Rotorschaft durch den Tangentialriemen bzw. durch die Andrückrolle bereits vor dem Wiederanlaufen der Spinnvorrichtung wieder in seine Betriebsstellung zurückgedrückt und vorschriftsmäßig auf der Stützscheibenlagerung positioniert ist.

Wie im Anspruch 3 dargelegt, sind besonders vorteilhafte Verhältnisse gegeben, wenn der Ringspalt im oberen Bereich der vertikalen Achse eine Breite zwischen 0,8 und 1,5 mm aufweist, wobei sich in Versuchen erwiesen hat, dass optimale Verhältnisse vorliegen, wenn die Ringspaltbreite in diesem Bereich etwa 0,95 mm beträgt (Anspruch 4).
Das heißt, durch die vorstehend beschriebene Ausbildung und Dimensionierung der Polscheiben kann sichergestellt werden, dass einerseits die Axialsteifigkeit des Axiallagers nicht negativ beeinflusst wird und dass anderseits die Radialkraft des Axiallagers so weit verringert ist, dass der körperliche Kontakt zwischen dem Rotorschaft und der Schutzeinrichtung des Axiallagers stets rechtzeitig aufgehoben wird.

Gemäß Anspruch 5 weist der lichte Querschnitt der Polscheibe vorzugsweise die Form eines Ovals auf.
Ein solcher ovaler lichter Querschnitt ist einerseits relativ unkompliziert herzustellen und bietet anderseits auf einfache Weise die Möglichkeit, die wirksamen Radialkräfte eines Axiallagers abzusenken, ohne dessen Axialsteifigkeit nennenswert negativ zu beeinflussen.

Um eine ordnungsgemäße Einbaulage der Polscheiben innerhalb des Axiallagers zu gewährleisten, ist gemäß Anspruch 6 außerdem vorgesehen, dass die Polscheiben jeweils einen ihre exakte Einbaulage vorgebenden Zentrieransatz aufweisen.
Durch einen solchen Zentrieransatz wird zuverlässig sichergestellt, dass die Polscheiben nur in einer vorgegebenen Winkelstellung innerhalb des Lagergehäuses des Axiallagers montiert werden können.

Wie im Anspruch 7 beschrieben, sind in vorteilhafter Ausführungsform die Polscheiben sowie die dazwischen positionierten Permanentmagnetringe im Einbauzustand in einer rückseitig geschlossenen Lagerbohrung eines Lagergehäuses des Axiallagers angeordnet und durch ein ringartig ausgebildetes Sicherungsmittel festgelegt.
Das heißt, die einzelnen Komponenten des Axiallagers sind so ausgebildet und angeordnet, dass innerhalb der Lagerbohrung eine exakte Positionierung und schonende Arretierung, insbesondere der relativ empfindlichen Permanentmagnetringe, sichergestellt ist.

Wie im Anspruch 8 dargelegt, weist das Sicherungsmittel vorzugsweise eine das Lagergehäuse in Richtung der Stützscheibenlagerung überragende Stützfläche zur radialen Abstützung des Rotorschaftes des Spinnrotors auf.

Durch das Abstützen des Rotorschaftes wird verhindert, dass die dynamische Magnetlagerkomponente an die stationäre Magnetlagerkomponente anlaufen kann, wenn der Spinnrotor im Rahmen einer Rotorreinigung auf der Stützscheibenlagerung mit einem Kippmoment beaufschlagt und dabei außerdem rotiert wird.

In bevorzugter Ausführungsform ist das Sicherungsmittel, an dem sich der Rotorschaft des Spinnrotors, der, wie vorstehend angedeutet, während der Rotorreinigung langsam rotiert wird, mit seinem Rotorschaft abstützt, entweder aus einer Kupferlegierung (Anspr.9), zum Beispiel Messing, oder aus einem glasfaserverstärktem Kunststoff (Anspr.10) gefertigt.
Jeder dieser Werkstoffe ist einerseits so abriebfest, dass eine ausreichend lange Lebensdauer des Sicherungsmittels gewährleistet ist, andererseits sind diese Werkstoffe nicht so hart, dass durch das langsame Rotieren des Spinnrotors während der Reinigung Schäden am Rotorschaft zu befürchten sind.

Wie im Anspruch 11 beschrieben, ist in vorteilhafter Ausführungsform vorgesehen, dass das Lagergehäuse des Axiallagers aus Aluminium oder einer Aluminiumlegierung gefertigt ist.
Ein solches Lagergehäuse aus Aluminium oder einer Aluminiumlegierung weist insbesondere den Vorteil auf, dass innerhalb eines solchen Gehäuses eine weitestgehend störungsfreie Bündelung der von den Permanentmagnetringen ausgehenden Magnetflüsse durch die ferromagnetischen Polscheiben der stationären Lagerkomponente gegeben ist.

Wie in den Ansprüchen 12 bis 14 dargelegt, ist in das Lagergehäuse des Weiteren ein abriebfester, axialer Anlaufschutz für den Rotorschaft des Spinnrotors eingesetzt, der vorzugsweise aus einem technischen Keramikwerkstoff oder aus einem glasfaserverstärktem Kunststoff gefertigt ist.

Durch einen solchen Anlaufschutz wird zuverlässig verhindert, dass der Rotorschaft, selbst wenn die Axialsteifigkeit des Lagers aufgrund äußerer Umstände kurzfristig überschritten werden sollte, an das Lagergehäuse anlaufen und dieses beschädigen kann.

Die Erfindung ist nachfolgend anhand der in den Zeichnungen dargestellten Ausführungsbeispiele näher erläutert.

Es zeigt:
- Fig. 1: eine Offenend-Spinnvorrichtung mit einem Spinnrotor, der mit seinem Rotorschaft im Lagerzwickel einer Stützscheibenlagerung abgestützt und über ein endseitiges magnetisches Axiallager positioniert ist, das mit Polscheiben zur Reduzierung der radialen Kraftkomponente des Axiallagers ausgestattet ist,
- Fig. 2: das in Fig.1 dargestellte magnetische Axiallager in einem größeren Maßstab sowie im Schnitt,
- Fig. 3: das in Fig.2 dargestellte magnetische Axiallager gemäß Schnitt III-III, mit einer ersten, vorteilhaften Ausführungsform einer Polscheibe,
- Fig. 4-11: weitere, alternative Ausführungsformen einer Polscheibe.

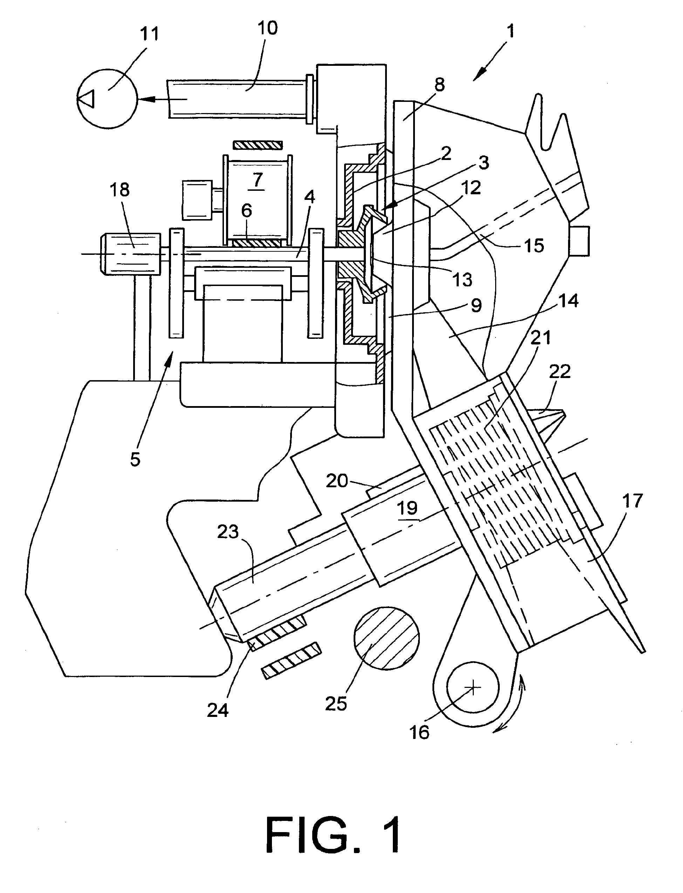

Die in Figur 1 dargestellte Offenend-Spinnvorrichtung trägt insgesamt die Bezugszahl 1.
Solche Spinnvorrichtungen verfügen, wie bekannt, jeweils über ein Rotorgehäuse 2, in dem die Spinntasse eines Spinnrotors 3 mit hoher Drehzahl umläuft. Der Spinnrotor 3 ist dabei mit seinem Rotorschaft 4 im Lagerzwickel einer Stützscheibenlagerung 5 abgestützt und wird durch einen maschinenlangen Tangentialriemen 6, der durch eine Andrückrolle 7 angestellt wird, beaufschlagt.

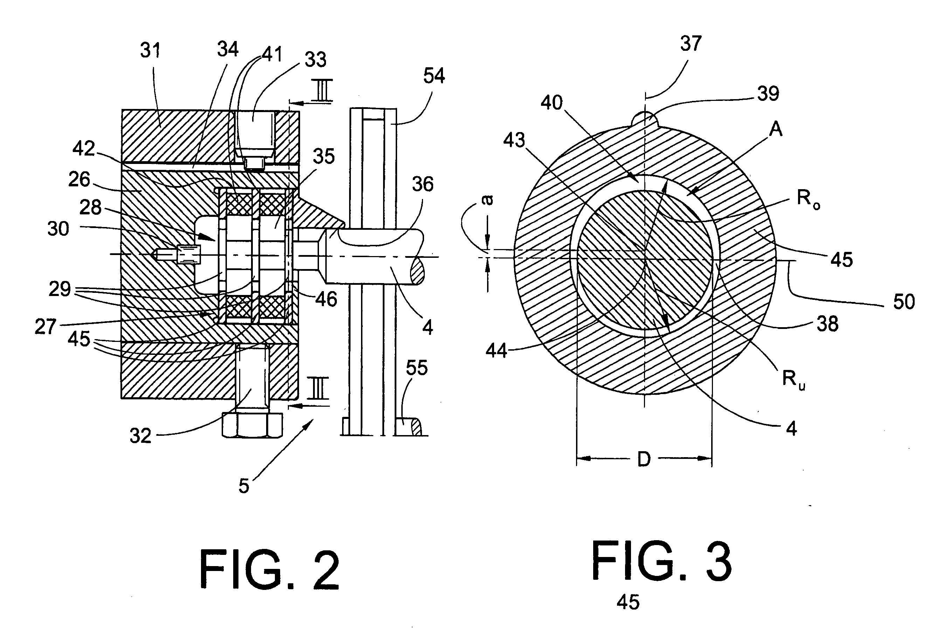

Die axiale Positionierung des Rotorschaftes 4 auf der Stützscheibenlagerung 5 erfolgt über ein permanentmagnetisches Axiallager 18, das in Figur 2 im Schnitt und im Detail dargestellt ist.
Wie ersichtlich, ist das an sich nach vorne hin offene Rotorgehäuse 2 während des Betriebes durch ein schwenkbar gelagertes Deckelelement 8, in das eine (nicht näher dargestellte) Kanalplatte mit einer Dichtung 9 eingelassen ist, verschlossen.
Das Rotorgehäuse 2 ist außerdem über eine entsprechende Unterdruckleitung 10 an eine Unterdruckquelle 11 angeschlossen, die den im Rotorgehäuse 2 notwendigen Spinnunterdruck erzeugt. Im Deckelelement 8 ist ein Kanalplattenadapter 12 angeordnet, der die Fadenabzugsdüse 13 sowie den Mündungsbereich des Faserleitkanals 14 aufweist. An die Fadenabzugsdüse 13 schließt sich ein Fadenabzugsröhrchen 15 an.
Außerdem ist am Deckelelement 8, das um eine Schwenkachse 16 begrenzt drehbar gelagert ist, ein Auflösewalzengehäuse 17 festgelegt. Das Deckelelement 8 weist des weiteren rückseitig Lagerkonsolen 19, 20 zur Lagerung einer Auflösewalze 21 beziehungsweise eines Faserbandeinzugszylinders 22 auf.
Die Auflösewalze 21 wird im Bereich ihres Wirtels 23 durch einen umlaufenden, maschinenlangen Tangentialriemen 24 angetrieben, während der (nicht dargestellte) Antrieb des Faserbandeinzugszylinders 22 vorzugsweise über eine Schneckengetriebeanordnung erfolgt, die auf eine maschinenlange Antriebswelle 25 geschaltet ist.

Figur 2 zeigt das erfindungsgemäße Axiallager im Detail, wobei das Axiallager 18 im Längsschnitt dargestellt ist.
Von dem in Fig. 1 dargestellten Stützscheibenlager 5 ist lediglich die hintere Stützscheibe 54 mit der zugehörigen Lagerwelle 55 teilweise dargestellt.
Das magnetische Axiallager 18 besteht insgesamt aus einer statischen Lagerkomponente 27, die in einem Lagergehäuse 26 angeordnet ist, sowie aus einer dynamischen Lagerkomponente 28, die durch ferromagnetische Stege 29 am Rotorschaft 5 des Spinnrotors 3 gebildet wird.

Die statische Lagerkomponente 27 weist Permanentmagnetringe 41 mit jeweils beidseitig angeordneten Polscheiben 45 auf. Die Permanentmagnetringe 41 sind dabei durch axial polarisierte Seltenerdmagneten gebildet, wobei sich gleiche Pole (N/N beziehungsweise S/S) gegenüberstehen.
Die Polscheiben 45, die innerhalb des Lagergehäuses 26 durch einen Zentrieransatz 39, der mit einer Führungsnut 42 im Lagergehäuse 26 korrespondiert, winkelgenau ausgerichtet sind, bestehen aus einem ferromagnetischen Material, vorzugsweise aus Stahl.
Die Polscheiben 45 und die Permanentmagnetringe 41 sind innerhalb des Lagergehäuses 26 durch ein ringartig ausgebildetes Sicherungsmittel 46 festgelegt, das aus einer Kupferlegierung, beispielsweise Messing, oder einem glasfaserverstärktem Kunststoff gefertigt ist.

Die ferromagnetischen Stege 29 der dynamischen Lagerkomponente 28 sind durch Einstiche in den Rotorschaft 4 gebildet, die mit nichtmagnetischem Material gefüllt sind.
Das nichtmagnetische, die Einstiche füllende Material ist vorzugsweise eine Kupferlegierung, beispielsweise Messing, welches mit Hartlot auf die Welle gelötet ist.

Als nichtmagnetische Stoffe kommen außer Kupferlegierungen allerdings auch Aluminium, Zinn oder Zink in Frage.
Diese metallischen Stoffe haben gegenüber einer ansonsten auch möglichen Kunststofffüllung der Einstiche allerdings den Vorteil einer höheren Wärmebeständigkeit sowie einer Stabilisierung des Rotorschaftes 4.
Die ferromagnetischen Stege 45 der dynamischen Lagerkomponente 28 weisen vorzugsweise die gleiche Breite auf, wie die Polscheiben 45 der stationären Lagerkomponente 27.

Das aus Aluminium oder einer Aluminiumlegierung gefertigte Lagergehäuses 26 ist, in axialer Richtung verstellbar, innerhalb einer stationären Lagerbuchse 31 festlegbar und dabei durch einen Schraubenbolzen 32 definiert justierbar. Das heißt, das Lagergehäuse 26 und damit die stationäre Lagerkomponente 27 ist bezüglich der feststehenden Lagerbuchse 31 axial verschiebbar angeordnet und kann exakt so justiert werden, dass sich während des Spinnbetriebes die spinntechnologisch optimale Lage für die Rotortasse des Spinnrotors 3 ergibt.
Die Einbaulage des Lagergehäuses 26 ist außerdem durch einen Zentrierbolzen 33 vorgegeben, der in einer Nut 34, die am Außenumfang des Lagergehäuses 26 angeordnet ist, geführt ist. Der Zentrierbolzen 33 und die Nut 34 bilden dabei auch eine Verdrehsicherung für das Lagergehäuse 26.

Innerhalb des Lagergehäuses 26 ist außerdem ein axialer Anlaufschutz 30 angeordnet, der im Bedarfsfall mit dem Rotorschaft 4 korrespondiert.

Um die dynamische Lagerkomponente 28 im Axiallager 18 zu positionieren, wird der Rotorschaft 4 des Spinnrotors 3 durch eine rückseitige Öffnung im Rotorgehäuse 2 sowie über die Lagerzwickel der Stützscheibenlagerung 5 in die Lagerbohrung 35 des Axiallagers 18 eingeführt und dabei so positioniert, dass die am Rotorschaft 4 angeordneten, die dynamische Lagerkomponente 28 bildenden ferromagnetischen Stege 29 mit den Polscheiben 45 der stationären Lagerkomponente 27 fluchten.

Wie aus der Fig. 2 weiter ersichtlich, sind die Polscheiben 45 sowie die dazwischen angeordneten Permanentmagnetringe 41 in einer rückseitig geschlossenen Lagerbohrung 35 des Lagergehäuses 26, winkelgenau ausgerichtet, positioniert und werden in dieser Lage durch ein Sicherungsmittel 46 fixiert, das beispielsweise mittels eines Presssitzes in der Lagerbohrung 35 festgelegt ist. Das Sicherungsmittel 46 verfügt über eine Stützfläche 36, an der sich der Rotorschaft 4 des Spinnrotors 3 abstützt, wenn er beispielsweise bei der Rotorreinigung durch ein (nicht dargestelltes) Reinigungsaggregat auf der Stützscheibenlagerung 5 mit einem Kippmoment beaufschlagt und dabei langsam rotiert wird.

Um zu verhindern, dass der Rotorschaft 4 nach Beendigung des Reinigungsprozesses aufgrund der Radialkraft des permanentmagnetischen Axiallagers 18 weiter an der Stützfläche 36 des Sicherungsmittels 46 "haften" bleibt und beim Wiederanlaufen der Offenend-Spinnvorrichtung 1 beschädigt werden kann, sind die Polscheiben 45, wie in den Figuren 3 - 11 dargestellt, modifiziert.
Das heißt, die Polscheiben 45 sind so ausgebildet, dass die Radialkraft des permanentmagnetischen Axiallagers 18 so weit reduziert wird, dass der Rotorschaft 4 nach Beendigung des Reinigungsprozesses durch den Tangentialriemen 6 bzw. die Andrückrolle 7 von der Stützfläche 36 des Sicherungsmittels 46 gelöst und sicher im Lagerzwickel der Stützscheibenlagerung 5 positioniert werden kann, wobei die Axialsteifigkeit des Axiallagers 18 allerdings im Wesentlichen erhalten bleibt.

Die Fig. 3 zeigt eine bevorzugte Ausführungsform einer Polscheibe 45.
In der Darstellung wird die Polscheibe 45 durch einen im Schnitt dargestellten Rotorschaft 4 eines Spinnrotors 3 durchfasst.

Der Durchmesser D des Rotorschaftes 4 ist etwas kleiner als die Breite des durch den oberen bzw. unteren Radius Rₒ bzw. Rᵤ vorgegebenen lichten Querschnitts A der Polscheibe 45.
Die Polscheibe 45 weist insgesamt einen lichten Querschnitt A in Form eines Ovals auf, das dadurch gebildet wird, dass der Mittelpunkt 43 des oberen Radius' Rₒ bezüglich der Mittellängsachse des Rotorschaftes 4 des auf der Stützscheibenlagerung 5 abgestützten Spinnrotors 3 sowie im Bezug auf den Mittelpunkt 44 des unteren Radius' Rᵤ in einem Abstand a angeordnet ist.
Das heißt, der Mittelpunkt 43 des oberen Radius' Rₒ etwas nach oben versetzt angeordnet.

Der Einsatz von Polscheiben 45 mit dem vorstehend beschriebenen lichten Querschnitt A führt im Betriebszustand des Axiallagers 18 dazu, dass sich zwischen dem Rotorschaft 4 des auf der Stützscheibenlagerung 5 abgestützten Spinnrotors 3 und dem Innendurchmesser der Polscheibe 45 ein Ringspalt 38 ergibt, der im oberen Bereich 40 der im Einbauzustand vertikal angeordneten Achse 37 der Polscheibe 45 seine größte Breite aufweist. Durch die relativ große Spaltbreite in diesem Bereich wird die vertikal wirksame Radialkraft des magnetischen Axiallagers 18 so spürbar vermindert, dass im Bedarfsfall der Tangentialriemen bzw. die Andrückrolle den Rotorschaft 4 sicher von der Stützfläche 36 des Sicherungsmittels 46 lösen und auf der Stützscheibenlagerung 5 positionieren kann.

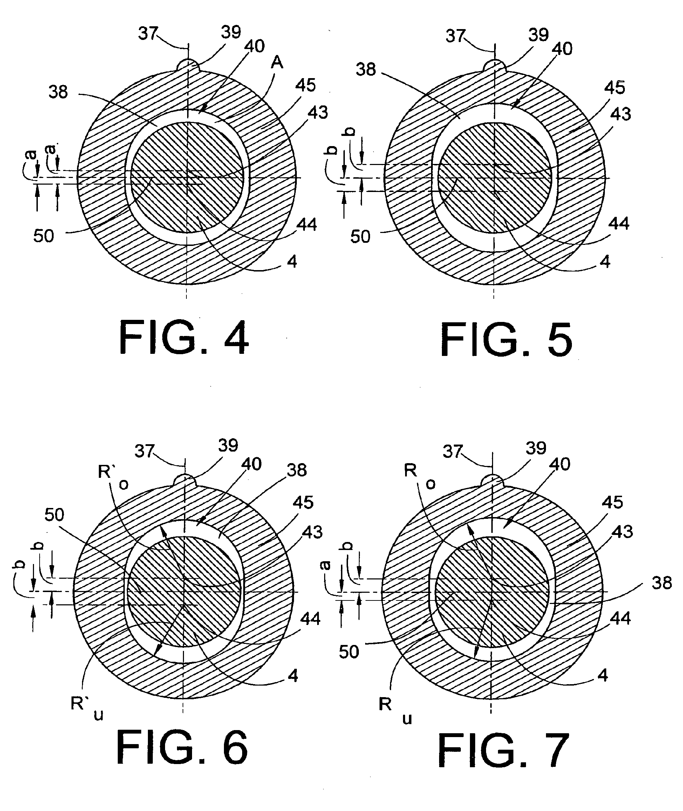

Weitere alternative Ausführungsformen von Polscheiden 45, die sich jeweils in der Form bzw. der Größe ihres lichten Querschnitts A unterscheiden, sind in den Figuren 4 - 11 dargestellt.

Die Polscheibe 45 gemäß Ausführungsform der Fig. 4 unterscheidet sich von der Polscheibe nach Fig. 3 lediglich darin, dass bei dieser Polscheibe 45 sowohl der Mittelpunkt 43 des oberen Radius' Rₒ als auch der Mittelpunkt 44 des unteren Radius' Rᵤ bezüglich der Mittellängsachse des Rotorschaftes 4 eines auf der Stützscheibenlagerung 5 abgestützten Spinnrotors 3 jeweils um ein Maß a nach oben bzw. nach unten versetzt angeordnet sind. Bei solchermaßen ausgebildeten Polscheiben 45 ergibt sich im Betriebszustand des Spinnrotors 3 ein relativ breiter Ringspalt sowohl im oberen, als auch im unteren Bereich der Achse 37.
Die Axialsteifigkeit des Axiallagers 18 liegt bei der in Fig. 4 dargestellten Ausführungsform der Polscheiben 45 etwas unter der Axialsteifigkeit der Ausführungsform nach Fig. 3.
Des Weiteren ist auch die wirksame Radialkraft des Lagers noch etwas höher als bei der in Fig. 3 dargestellten Ausführungsform.

Bei der in Fig. 5 dargestellten Ausführungsform einer Polscheibe 45 ist das Maß der jeweiligen Verlagerung der Mittelpunkte 43 und 44 etwas größer, vorzugsweise doppelt so groß, als beim Ausführungsbeispiel gemäß Fig. 4 und deshalb in der Fig. 5 mit b bezeichnet.
Das ergibt im Betriebszustand des Spinnrotors 3 sowohl im oberen, als auch im unteren Bereich der Achse 37 einen Ringspalt 38, der deutlich breiter ist als der Ringspalt 38 bei Polscheiben 45, die die in Fig. 4 dargestellte Ausführungsform aufweisen.
Unter diesen relativ breiten Ringspalten leidet die Axialsteifigkeit des Axiallagers, während die Radialkraft, wie gewünscht vermindert wird.

Die in Fig. 6 dargestellte Ausführungsform der Polscheibe 45 entspricht im Wesentlichen der Ausführungsform gemäß Fig. 5. Allerdings sind die oberen und unteren Radien R'ₒ und R'ᵤ des lichten Querschnitts A der Polscheibe 45 etwas kleiner als der entsprechende Radius Rₒ und Rᵤ bei den vorstehend beschriebenen Ausführungsbeispielen.
Im Betriebszustand führt dies zu sehr schmalen Ringspalten im Bereich einer orthogonal zur vertikalen Achse 37 angeordneten Achse 50 mit der Folge, dass die Axialsteifigkeit wieder etwas größer wird. Allerdings steigt auch die Größe der Radialkraft deutlich an.

Die Ausführungsform einer Polscheibe 45 gemäß Fig. 7 ist im Wesentlichen ein Mix Ausführungsformen, wie sie in der Fig. 4 und der Fig. 5 dargestellt sind.
Das heißt, der Mittelpunkt 43 des oberen Radius' Rₒ ist bezüglich der Mittellängsachse des Rotorschaftes 4 eines auf der Stützscheibenlagerung 5 abgestützten Spinnrotors 3 um das Maß b nach oben versetzt, während der Mittelpunkt 44 des unteren Radius' Rᵤ um das Maß a nach unten versetzt ist.
Auf diese Weise werden die Ringspaltbreiten im oberen und im unteren Bereich der Achse 37 unterschiedlich.
Durch die in Fig. 7 dargestellte Ausführungsform der Polscheiben 45 gelingt eine Minimierung der radial wirksamen Magnetkraft des Axiallagers 18, allerdings fällt die Axialsteifigkeit des Lagers, insbesondere gegenüber der in Fig. 3 dargestellten Ausführungsform der Polscheiben etwas ab.

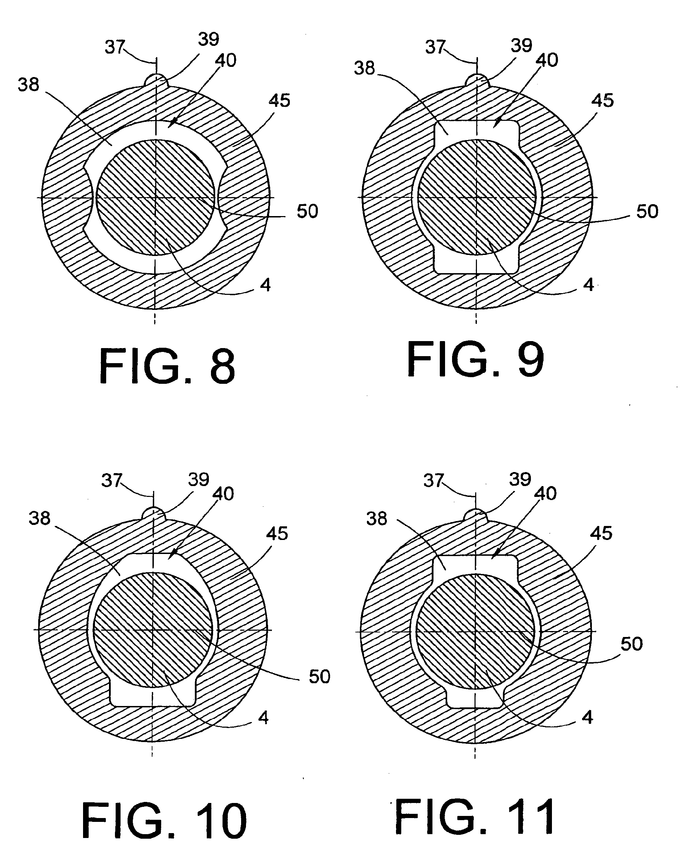

Bei den in den Figuren 8 - 11 dargestellten Ausführungsformen weicht die Form des lichten Querschnittes A der Polscheibe 45 jeweils von einem Oval ab und weist eine mehr oder weniger schlüssellochähnliche Ausbildung auf.

Auch bei diesen alternativen Ausführungsbeispielen für Polscheiben, weist jede Polscheibe einen lichten Querschnitt auf, der im Bereich einer im Einbauzustand der Polscheiben vertikal angeordneten Achse eine größere Ausdehnung besitzt, als im Bereich einer zur vertikalen Achse orthogonal angeordneten Achse.
Die Ausführungsformen gemäß der Figuren 9, 10 und 11 zeichnen sich dabei durch eine relativ hohe Axialsteifigkeit des Lagers, aber auch durch eine verhältnismäßig große Radialkraft aus, während das Axiallager mit Polscheiben 45 gemäß Fig. 8 zwar eine geringe radiale Kraftkomponente aufweist, die Axialsteifigkeit des Lagers aber etwas zu wünschen übrig lässt.

## Patentansprüche

1. Axiallager für einen im Lagerzwickel einer Stützscheibenlagerung axialschubfrei gelagerten Spinnrotor einer Offenend-Spinnvorrichtung, mit einer statischen Lagerkomponente (27), die wenigstens zwei beidseits durch Polscheiben (45) begrenzte, axial polarisierte Permanentmagnetringe (41) aufweist, welche so in einem Lagergehäuse (26) angeordnet sind, dass sich im Einbauzustand gleichsinnige Pole (N/N oder S/S) gegenüberstehen, einer dynamischen Lagerkomponente (28), die durch am Rotorschaft des Spinnrotors im Abstand der Polscheiben (45) angeordnete ferromagnetische Stege (29) gebildet wird, sowie einer Schutzeinrichtung, die verhindert, dass sich die beiden Lagerkomponenten gegenseitig berühren können,
**dadurch gekennzeichnet,**
**dass** jede Polscheibe (45) einen lichten Querschnitt (A) aufweist, der im Bereich einer im Einbauzustand der Polscheiben (45) vertikal angeordneten Achse (37) eine größere Ausdehnung aufweist, als im Bereich einer zur vertikalen Achse (37) orthogonal angeordneten Achse (50).

2. Axiallager nach Anspruch 1, **dadurch gekennzeichnet, dass** im Betriebszustand des Spinnrotors (3) zwischen den Polscheiben (45) und den ferromagnetischen Stegen (29) am Rotorschaft (4) des Spinnrotors (3) jeweils ein Ringspalt (38) gegeben ist, der seine größte Breite oberhalb des Rotorschaftes (4) im Bereich der Symmetrieachse (37) aufweist.

3. Axiallager nach Anspruch 2, **dadurch gekennzeichnet, dass** der Ringspalt (38) in einem oberen Bereich (40) der vertikalen Symmetrieachse (37) eine Breite zwischen 0,8 und 1,5 mm aufweist.

4. Axiallager nach Anspruch 2, **dadurch gekennzeichnet, dass** der Ringspalt (38) im oberen Bereich (40) der vertikalen Symmetrieachse (37) eine Breite von 0,95 mm aufweist.

5. Axiallager nach einem der vorherigen Ansprüche, **dadurch gekennzeichnet, dass** der lichte Querschnitt (A) der Polscheibe (45) die Form eines Ovals aufweist.

6. Axiallager nach einem der vorherigen Ansprüche, **dadurch gekennzeichnet, dass** jede Polscheibe (45) einen ihre Einbaulage vergebenden Zentrieransatz (39) aufweist.

7. Axiallager nach einem der vorherigen Ansprüche, **dadurch gekennzeichnet, dass** die Polscheiben (45) sowie die dazwischen positionierten Permanentmagnetringe (41) im Einbauzustand in einer rückseitig geschlossenen Lagerbohrung (35) eines Lagergehäuses (26) angeordnet und durch ein ringartig ausgebildetes Sicherungsmittel (46) festgelegt sind.

8. Axiallager nach Anspruch 7, **dadurch gekennzeichnet, dass** das Sicherungsmittel (46) eine das Lagergehäuse (26) in Richtung der Stützscheibenlagerung (5) überragende Stützfläche (36) zur radialen Abstützung des Rotorschaftes (4) des Spinnrotors (3) aufweist.

9. Axiallager nach Anspruch 7, **dadurch gekennzeichnet, dass** das Sicherungsmittel (46) aus einer Kupferlegierung gefertigt ist.

10. Axiallager nach Anspruch 7, **dadurch gekennzeichnet, dass** das Sicherungsmittel (46) aus einem glasfaserverstärkten Kunststoff gefertigt ist.

11. Axiallager nach Anspruch 1, **dadurch gekennzeichnet, dass** das Lagergehäuse (26) aus Aluminium oder einer Aluminiumlegierung gefertigt ist.

12. Axiallager nach Anspruch 11, **dadurch gekennzeichnet, dass** in das Lagergehäuse (26) ein abriebfester, axialer Anlaufschutz (30) für den Rotorschaft (4) des Spinnrotors (3) eingesetzt ist.

13. Axiallager nach Anspruch 12, **dadurch gekennzeichnet, dass** der Anlaufschutz (30) aus einem technischen Keramikwerkstoff gefertigt ist.

14. Axiallager nach Anspruch 12, **dadurch gekennzeichnet, dass** der Anlaufschutz (30) aus einem glasfaserverstärktem Kunststoff gefertigt ist.

## Claims

1. Axial bearing for a spinning rotor, which is mounted in an axial thrust-free manner in the bearing interstice of a support disc bearing arrangement, of an open-end spinning device, comprising a static bearing component (27), which has at least two axially polarised permanent magnet rings (41), which are limited on both sides by pole discs (45) and arranged in a bearing housing (26) in such a way that poles (N/N or S/S) which are equidirectional in the installed state oppose one another, a dynamic bearing component (27), which is formed by ferromagnetic webs (29) arranged on the rotor shaft of the spinning rotor at the spacing of the pole discs (45), as well as a protection device, which prevents the two bearing components being able to touch one another, **characterised in that** each pole disc (45) has a clear cross-section (A), which has a larger extent in the region of an axis (37) which is arranged vertically in the installed state of the pole discs (45) than in the region of an axis (50) arranged orthogonally to the vertical axis (37).

2. Axial bearing according to claim 1, **characterised in that** an annular gap (38), which has its greatest width above the rotor shaft (4) in the region of the axis (37) of symmetry, is provided in each case in the operating state of the spinning rotor (3) between the pole discs (45) and the ferromagnetic webs (29) on the rotor shaft (4) of the spinning rotor (3).

3. Axial bearing according to claim 2, **characterised in that** the annular gap (38) has a width of between 0.8 and 1.5 mm in an upper region (40) of the vertical axis (37) of symmetry.

4. Axial bearing according to claim 2, **characterised in that** the annular gap (38) has a width of 0.95 mm in the upper region (40) of the vertical axis (37) of symmetry.

5. Axial bearing according to any one of the preceding claims, **characterised in that** the clear cross-section (A) of the pole disc (45) has the shape of an oval.

6. Axial bearing according to any one of the preceding claims, **characterised in that** each pole disc (45) has a centring lug (39) providing its installation position.

7. Axial bearing according to any one of the preceding claims, **characterised in that** the pole discs (45) and the permanent magnet rings (41) positioned therebetween, in the installed state, are arranged in a bearing bore (35), which is closed at the rear, of a bearing housing (26) and are fixed by an annular type of securing means (46).

8. Axial bearing according to claim 7, **characterised in that** the securing means (46) has a support face (36) projecting over the bearing housing (26) in the direction of the support disc bearing arrangement (5) for the radial support of the rotor shaft (4) of the spinning rotor (3).

9. Axial bearing according to claim 7, **characterised in that** the securing means (46) is manufactured from a copper alloy.

10. Axial bearing according to claim 7, **characterised in that** the securing means (46) is manufactured from a glass fibre-reinforced plastics material.

11. Axial bearing according to claim 1, **characterised in that** the bearing housing (26) is manufactured from aluminium or an aluminium alloy.

12. Axial bearing according to claim 11, **characterised in that** an abrasion-resistant, axial contact protection (30) for the rotor shaft (4) of the spinning rotor (3) is inserted into the bearing housing (26).

13. Axial bearing according to claim 12, **characterised in that** the contact protection (30) is manufactured from an industrial ceramics material.

14. Axial bearing according to claim 12, **characterised in that** the contact protection (30) is manufactured from a glass fibre-reinforced plastics material.

## Revendications

1. Palier axial destiné à un rotor de filage d'un dispositif de filature à fibres libérées, monté dans l'espace interstitiel de montage d'un système de portée à disques de soutien, avec absence de poussée axiale, comprenant un élément structurel statique (27) muni d'au moins deux annaux (41) à magnétisation permanente qui sont polarisés axialement, sont délimités de part et d'autre par des disques polaires (45) et sont logés dans un carter (26) dudit palier, de façon telle que des pôles de même sens (N/N ou S/S) soient situés en vis-à-vis à l'état intégré ; un élément structurel dynamique (28), matérialisé par des lamelles ferromagnétiques (29) placées sur l'arbre rotorique dudit rotor de filage, à distance desdits disques polaires (45) ; ainsi qu'un système de protection interdisant une possibilité de venue en contact mutuel des deux éléments structurels du palier,
**caractérisé par le fait**
**que** chaque disque polaire (45) est pourvu d'une section transversale intérieure (A) présentant, dans la région d'un axe (37) occupant une position verticale à l'état intégré des disques polaires (45), une plus grande étendue que dans la région d'un axe (50) disposé perpendiculairement audit axe vertical (37).

2. Palier axial selon la revendication 1, **caractérisé par le fait qu'**un interstice annulaire (38) respectivement réservé sur l'arbre rotorique (4) du rotor de filage (3) entre les disques polaires (45) et les languettes ferromagnétiques (29), à l'état de fonctionnement dudit rotor de filage (3), présente sa largeur maximale au-dessus dudit arbre rotorique (4), dans la région de l'axe de symétrie (37).

3. Palier axial selon la revendication 2, **caractérisé par le fait que** l'interstice annulaire (38) présente une largeur comprise entre 0,8 et 1,5 mm dans la région supérieure (40) de l'axe vertical de symétrie (37).

4. Palier axial selon la revendication 2, **caractérisé par le fait que** l'interstice annulaire (38) présente une largeur de 0,95 mm dans la région supérieure (40) de l'axe vertical de symétrie (37).

5. Palier axial selon l'une des revendications précédentes, **caractérisé par le fait que** la section transversale intérieure (A) du disque polaire (45) revêt la forme d'un ovale.

6. Palier axial selon l'une des revendications précédentes, **caractérisé par le fait que** chaque disque polaire (45) comporte un appendice de centrage (39) lui assignant sa position d'intégration.

7. Palier axial selon l'une des revendications précédentes, **caractérisé par le fait qu'**à l'état intégré, les disques polaires (45), ainsi que les anneaux (41) à magnétisation permanente interposés entre lesdits disques, sont logés dans un alésage de montage (35) à face postérieure obturée, pratiqué dans un carter (26) dudit palier, et sont bloqués à demeure par un moyen d'arrêt (46) dont la réalisation est de type annulaire.

8. Palier axial selon la revendication 7, **caractérisé par le fait que** le moyen d'arrêt (46) comporte une surface d'appui (36) faisant saillie au-delà du carter (26) dudit palier dans la direction du système de portée (5) à disques de soutien, et conçue pour offrir un appui radial à l'arbre rotorique (4) du rotor de filage (3).

9. Palier axial selon la revendication 7, **caractérisé par le fait que** le moyen d'arrêt (46) est fabriqué en un alliage de cuivre.

10. Palier axial selon la revendication 7, **caractérisé par le fait que** le moyen d'arrêt (46) est fabriqué en une matière plastique renforcée par des fibres de verre.

11. Palier axial selon la revendication 1, **caractérisé par le fait que** le carter (26) dudit palier est fabriqué en aluminium ou en un alliage d'aluminium.

12. Palier axial selon la revendication 11, **caractérisé par le fait qu'**une protection axiale (30) prévenant une venue en contact, résistant à l'usure par frottement et dédiée à l'arbre rotorique (4) du rotor de filage (3), est intégrée dans le carter (26) dudit palier.

13. Palier axial selon la revendication 12, **caractérisé par le fait que** la protection (30), prévenant une venue en contact, est fabriquée en un matériau céramique à usage technique.

14. Palier axial selon la revendication 12, **caractérisé par le fait que** la protection (30), prévenant une venue en contact, est fabriquée en une matière plastique renforcée par des fibres de verre..
